# EUROPÄISCHE PATENTSCHRIFT

(11) **EP 2 148 798 B1**
(45) Veröffentlichungstag und Bekanntmachung des Hinweises auf die Patenterteilung: **24.12.2014**
(21) Anmeldenummer: 08735702.6
(22) Anmeldetag: 02.04.2008
(51) Int. Cl.: B60Q 3/02, B64D 11/00

(54) **BELEUCHTUNGSVORRICHTUNG FÜR DIE BELEUCHTUNG VON FAHRZEUGINNENRÄUMEN**
ILLUMINATION DEVICE FOR ILLUMINATING THE INSIDE OF A VEHICLE
DISPOSITIF D'ÉCLAIRAGE CONÇU POUR ÉCLAIRER L'ESPACE INTÉRIEUR D'UN VÉHICULE

(30) Priorität: 27.04.2007 DE 102007020397
(43) Veröffentlichungstag der Anmeldung: 03.02.2010
(73) Patentinhaber: Bombardier Transportation GmbH, 10785 Berlin (DE); SBF Spezialleuchten Wurzen, 04808 Wurzen (DE)
(72) Erfinder: WEISE, Gerd, 02829 Markersdorf, Ot Pfaffendorf (DE); TIRSCHLER, Bernd, 02828 Görlitz (DE); CZEKAY, Dietmar Dr., 51375 Leverkusen (DE); GEISSLER, Friedemann, 04828 Bennewitz (DE); KALBE, Dirk, 04435 Schkeuditz, Ot Glesien (DE); PENNDORF, Hans Joachim, 02877 Görlitz (DE)
(74) Vertreter: Cohausz & Florack
(86) Internationale Anmeldenummer: PCT/EP2008/053952
(87) Internationale Veröffentlichungsnummer: WO 2008/132008

(56) Entgegenhaltungen:
- WO-A-00/71930
- DE-A1- 10 211 123
- DE-A1- 19 920 404
- DE-A1-102005 039 651
- GB-A- 1 021 159
- GB-A- 2 386 678
- JP-A- 2005 324 694
- US-A- 2 090 542
- US-A- 4 929 866

## Beschreibung

Die vorliegende Erfindung betrifft ein Fahrgastabteil mit einer Gepäckablage mit einer Beleuchtungsvorrichtung für die Beleuchtung von Fahrzeuginnenräumen mit einer Lichtquelle, die Licht in eine Vorwärtsrichtung emittiert, wobei die Lichtquelle eine Vielzahl von in einer Reihe nebeneinander angeordneten Leuchtdioden aufweist, wobei die Reihe von Leuchtdioden in einer Richtung angeordnet ist, die senkrecht zur Vorwärtsrichtung des emittierten Lichts verläuft, wobei ein Reflektor vorgesehen ist, der Reflektor das Licht aller Leuchtdioden umlenkt, und der Reflektor parallel zu der Reihe von Leuchtdioden angeordnet ist, und wobei die Beleuchtungsvorrichtung eine Lichtaustrittsöffnung aufweist. Ein entsprechendes Fahrgastabteil mit einer Gepäckablage mit Beleuchtungsvorrichtung kann beispielsweise der JP 2005-324694 A entnommen werden.

Aus dem Stand der Technik sind eine Vielzahl von unterschiedlichen Beleuchtungsvorrichtungen mit Leuchtdioden oder Glühbirnen als Lichtquellen bekannt. Beispielhaft sei hier verwiesen auf die GB 2 386 678 A, die DE 102 11 123 A1, die DE 199 20 404 A1, die WO 00/71930 A1, die GB 1,021,159, die DE 10 2005 039 651 A1, die US 2,090,542 und die US 4,929,866. Weiterer Stand der Technik wird im Folgenden kurz beschrieben.

Eine weitere Beleuchtungsvorrichtung ist beispielsweise aus der JP 2006-103631 A bekannt. Bei dieser Beleuchtungsvorrichtung weist die Lichtquelle zwei Reihen von nebeneinander angeordneten Leuchtdioden (LEDs) auf, wobei die LEDs der einen Reihe winkelig zu den LEDs der anderen Reihe angestellt sind. Auf diese Weise kommt es zu einer Überlappung des emittierten Lichts der einen LED-Reihe mit dem Licht der anderen LED-Reihe, wodurch ein relativ breiter Bereich eines Fahrgastabteils direkt angeleuchtet werden kann. Die direkte Beleuchtung hat jedoch den Nachteil, dass der Fahrgast geblendet wird. Im übrigen ist diese Beleuchtungsvorrichtung aufgrund der Vielzahl verschiedener LEDs sehr aufwendig in der Herstellung.

Aus der JP 2003-257220 A ist ebenfalls eine Beleuchtungsvorrichtung für die Beleuchtung von Fahrzeuginnenräumen bekannt, bei der über eine streifenförmige Lichtquelle ein relativ breiter Bereich eines Fahrgastabteils beleuchtet werden kann. Die Lichtquelle weist eine Vielzahl von in einer Reihe hintereinander angeordneten LEDs auf, die das Licht im wesentlichen in die Richtung emittieren, in der die LED-Reihe verläuft. Mit anderen Worten, nahezu jede LED emittiert das Licht in Richtung der jeweils benachbarten LED. Ferner ist jeder LED ein separater, in aufwendiger Weise gestuft gestalteter Reflektor zugeordnet, der das von der jeweiligen LED emittierte Licht umlenkt. Zwar wird mittels dieser Beleuchtungsvorrichtung eine indirekte Beleuchtung geschaffen, die aufgrund der in aufwendiger Weise gestuften Reflektoren den Fahrgast weniger blendet. Jedoch ist auch diese Beleuchtungsvorrichtung aufgrund der Vielzahl von LEDs und Reflektoren sehr aufwendig in der Herstellung. Im übrigen verlangt die Beleuchtungsvorrichtung einen relativ großen Platzbedarf.

Problematisch bei dem eingangs genannten Fahrgastabteil ist, dass das Licht der Gepäckablage überwiegend zur Seite hin, also in horizontaler Richtung, aus der Lichtaustrittsöffnung austritt. Die Gepäckablage ist dabei etwa in Augenhöhe einer Person, die in dem Fahrgastabteil steht, montiert, wodurch die Beleuchtungsvorrichtung den Fahrgast relativ stark blendet.

Es ist daher die Aufgabe der vorliegenden Erfindung, ein Fahrgastabteil mit einer Gepäckablage mit Beleuchtungsvorrichtung so weiter zu bilden, dass die Fahrgäste möglichst nicht geblendet werden.

Die zuvor hergeleitete und aufgezeigte Aufgabe wird erfindungsgemäß bei einem Fahrgastabteilung mit einer Gepäckablage mit einer Beleuchtungsvorrichtung der eingangs genannten Art dadurch gelöst, dass der Reflektor bezogen auf die Vorwärtsrichtung vor der Lichtquelle angeordnet ist, dass die Lichtaustrittsöffnung in einer Ebene liegt, die parallel zur Vorwärtsrichtung und zur Richtung der Reihe von Leuchtdioden verläuft, dass die Lichtaustrittsöffnung von einer zumindest teilweise transparenten Scheibe, die eine satinierte Oberfläche aufweist, abgedeckt ist und dass das Licht nach dem Umlenken in eine Richtung aus der Lichtaustrittsöffnung austritt, die nach unten weist und senkrecht zur Vorwärtsrichtung und zur Richtung der Reihe von Leuchtdioden verläuft.

Eine solche Beleuchtungsvorrichtung führt zu einer optimalen, insbesondere blendfreien, Ausleuchtung des Fahrzeuginnenraums von Fahrgastabteilen in Schienenfahrzeugen, Flugzeugen oder Bussen. Gleichzeitig wird aufgrund der Verwendung eines einzelnen Reflektors, der parallel zu der Reihe von LEDs angeordnet ist und das Licht aller LEDs umlenkt, der Aufbau der Beleuchtungsvorrichtung deutlich vereinfacht. Zum einen werden weniger Bauteile, nämlich lediglich eine Reihe von nebeneinander angeordneten LEDs als Lichtquelle sowie lediglich ein einzelner Reflektor, benötigt, was den Herstellungsaufwand und die Herstellungskosten auf ein Minimum reduziert. Zum anderen wird aufgrund der relativ geringen Anzahl von Bauteilen und der optimierten Anordnung der LEDs relativ zum Reflektor eine deutliche Verringerung des benötigten Platzbedarfs erreicht.

Gemäß einer ersten Ausgestaltung des erfindungsgemäßen Fahrgastabteils ist der Reflektor höchsten so lang wie die Reihe von LEDs. Auf diese Weise kann der Reflektor das emittierte Licht sämtlicher LEDs der Lichtquelle ohne weiteres erfassen und umlenken, wobei der Platzbedarf gleichzeitig auf ein Minimum reduziert ist.

Gemäß noch einer weiteren Ausgestaltung des erfindungsgemäßen Fahrgastabteils hat der Reflektor eine zumindest teilweise diffuse Oberfläche. Vorzugsweise ist der Reflektor vollständig diffus ausgestaltet. Die diffuse Oberfläche dient dazu, das von der Lichtquelle emittierte Licht beim Auftreffen auf den Reflektor zu streuen. Auf diese Weise wird eine angenehme indirekte Beleuchtung geschaffen, die den Fahrgast nicht blendet.

Erfindungsgemäß weist die Beleuchtungsvorrichtung eine Lichtaustrittsöffnung auf, die in einer Ebene liegt, die parallel zur Vorwärtsrichtung verläuft. Mit anderen Worten, die Lichtaustrittsöffnung weist in eine Richtung, die senkrecht zur Vorwärtsrichtung des emittierten Lichts verläuft. Zusätzlich ist vorgesehen, dass die Lichtaustrittsöffnung in einer Ebene liegt, die parallel zur Richtung der Reihe von LEDs verläuft. Bei einer solchen Anordnung der Lichtsaustrittsöffnung wird erreicht, dass im wesentlichen nur solches Licht durch die Lichtaustrittsöffnung tritt, welches zuvor vom Reflektor, vorzugsweise dem diffusen Reflektor, umgelenkt worden ist. Auf diese Weise wird die Blendfreiheit weiter erhöht.

Darüber hinaus ist die Lichtaustrittsöffnung, teilweise oder vollständig, von einer zumindest teilweise transparenten Scheibe abgedeckt. Da die Scheibe, die aus Glas, insbesondere Weißglas, vorzugsweise Sicherheitsglas, oder Kunststoff gebildet sein kann, eine satinierte Oberfläche aufweist, die vorzugsweise ins Innere der Beleuchtungsvorrichtung weist, wird auf optisch ansprechende Weise eine zusätzliche Streuung des Lichts erreicht, wodurch die Blendfreiheit nochmals entsprechend erhöht wird.

Gemäß wiederum einer weiteren Ausgestaltung des erfindungsgemäßen Fahrgastabteils ist, zusätzlich zu dem zuvor beschriebenen Reflektor, ein weiterer Reflektor bezogen auf die Vorwärtsrichtung hinter den und/oder seitlich der LEDs angeordnet. Ein solcher Reflektor, der ebenfalls vorzugsweise höchstens so lang wie die Reihe von LEDs ist und auch eine zumindest teilweise diffuse Oberfläche aufweisen kann, ermöglicht einerseits eine optimierte Lichtausbeute und eröffnet andererseits eine weitere Möglichkeit, das emittierte Licht zu streuen.

Wie gesagt ist die erfindungsgemäß vorgesehene Beleuchtungsvorrichtung Bestandteil einer Gepäckablage eines Fahrgastabteils. Es ist beispielsweise denkbar, die Beleuchtungsvorrichtung aufgrund ihrer optimalen Beleuchtungseigenschaften und geringen Abmessungen in Fahrgastabteilen unmittelbar neben einer Funktionskammer mit Lautsprechern, Leseleuchten, Bedientasten etc. anzuordnen. So kann auf platzsparende Weise zusätzlich zu Leseleuchten, die das Licht direkt und relativ punktgenau abstrahlen, eine für den Fahrgast angenehme Hintergrundbeleuchtung geschaffen werden. Gleichzeitig ist es auch denkbar, mit der Beleuchtungsvorrichtung eine Notbeleuchtung zu schaffen.

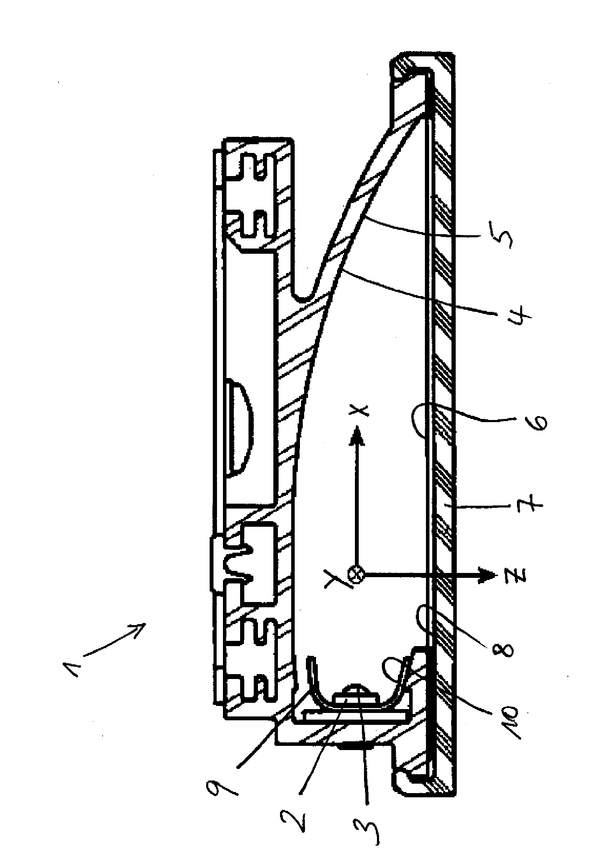

Es gibt nun eine Vielzahl von Möglichkeiten, das erfindungsgemäße Fahrgastabteil auszugestalten und weiterzubilden. Hierzu wird einerseits verwiesen auf die dem jeweiligen Patentanspruch 1 nachgeordneten Patentansprüche, andererseits auf die Beschreibung eines Ausführungsbeispiels in Verbindung mit der Zeichnung.

Die einzige Figur zeigt ein Ausführungsbeispiel einer Beleuchtungsvorrichtung 1 für die Beleuchtung eines Zugabteils gemäß der vorliegenden Erfindung.

Die Beleuchtungsvorrichtung 1 weist eine Lichtquelle 2 auf, die Licht in eine Vorwärtsrichtung X emittiert, wobei die Lichtquelle 2 eine Vielzahl von in einer Reihe nebeneinander angeordneten LEDs 3 aufweist.

Die Reihe von LEDs 3 ist in einer Richtung Y angeordnet, die senkrecht zur Vorwärtsrichtung X des emittierten Lichts und damit im dargestellten Fall senkrecht zur Zeichnungsebene verläuft. Mit anderen Worten, die LEDs 3 sind in der Richtung Y nebeneinander angeordnet und emittieren das Licht in der dargestellten Schnittansicht nach rechts.

Ferner ist ein Reflektor 4 mit einer diffusen Oberfläche 5 bezogen auf die Vorwärtsrichtung X vor der Lichtquelle 2, in der dargestellten Schnittansicht also rechts von der Lichtquelle 2, angeordnet.

Der Reflektor 4 ist so angeordnet und ausgebildet, dass er das Licht sämtlicher LEDs 3 erfasst und umlenkt. Dabei wird erfindungsgemäß das emittierte Licht so umgelenkt, dass es in gestreuter Form in das Fahrgastabteil durch eine Lichtaustrittsöffnung 6 austritt, die in einer Ebene liegt, die parallel zur Vorwärtsrichtung X und zur Richtung Y der Reihe von LEDs 3 verläuft. Mit anderen Worten, das Licht tritt nach dem Umlenken in eine Richtung Z aus der Lichtaustrittsöffnung 6 aus, wobei in der dargestellten Schnittansicht die Richtung Z nach unten weist.

Um eine optimale Blendfreiheit zu garantieren, ist die Lichtaustrittsöffnung 6 mit einer transparenten Scheibe 7 aus Kunststoff abgedeckt, wobei die Scheibe 7 auf der Innenseite eine satinierte Oberfläche 8 hat, die zu einer zusätzlichen Streuung des austretenden Lichts führt.

Ein weiterer Reflektor 9, der ebenfalls eine diffuse Oberfläche 10 hat, ist im Innern der Beleuchtungsvorrichtung 1 bezogen auf die Vorwärtsrichtung X hinter den LEDs 3 und seitlich davon angeordnet. Durch den Reflektor 9 wird eine zusätzliche Reflektion und Streuung des emittierten Lichts erreicht, was zu einer verbesserten Lichtausbeute und zu einer höheren Blendfreiheit führt.

Das in der einzigen Figur dargestellte Ausführungsbeispiels einer Beleuchtungsvorrichtung 1 stellt eine kompakte bauliche Einheit dar und wird in eine Gepäckablage des Fahrgastabteils integriert.

## Patentansprüche

1. Fahrgastabteil mit einer Gepäckablage mit einer Beleuchtungsvorrichtung (1) für die Beleuchtung von Fahrzeuginnenräumen mit einer Lichtquelle (2), die Licht in eine Vorwärtsrichtung (X) emittiert, wobei die Lichtquelle (2) eine Vielzahl von in einer Reihe nebeneinander angeordneten Leuchtdioden (3) aufweist, wobei die Reihe von Leuchtdioden (3) in einer Richtung (Y) angeordnet ist, die senkrecht zur Vorwärtsrichtung (X) des emittierten Lichts verläuft, wobei ein Reflektor (4) vorgesehen ist, der Reflektor (4) das Licht aller Leuchtdioden (3) umlenkt, und der Reflektor (4) parallel zu der Reihe von Leuchtdioden (3) angeordnet ist, und wobei die Beleuchtungsvorrichtung (1) eine Lichtaustrittsöffnung (6) aufweist, **dadurch gekennzeichnet, dass** der Reflektor (4) bezogen auf die Vorwärtsrichtung (X) vor der Lichtquelle (2) angeordnet ist, dass die Lichtaustrittsöffnung (6) in einer Ebene liegt, die parallel zur Vorwärtsrichtung (X) und zur Richtung (Y) der Reihe von Leuchtdioden (3) verläuft, dass die Lichtaustrittsöffnung (6) von einer zumindest teilweise transparenten Scheibe (7), die eine satinierte Oberfläche (8) aufweist, abgedeckt ist und dass das Licht nach dem Umlenken in eine Richtung (Z) aus der Lichtaustrittsöffnung (6) austritt, die nach unten weist und senkrecht zur Vorwärtsrichtung (X) und zur Richtung (Y) der Reihe von Leuchtdioden (3) verläuft.

2. Fahrgastabteil nach Anspruch 1, **dadurch gekennzeichnet, dass** der Reflektor (4) höchstens so lang wie die Reihe von Leuchtdioden (3) ist.

3. Fahrgastabteil nach Anspruch 1 oder 2, **dadurch gekennzeichnet, dass** der Reflektor (4) eine zumindest teilweise diffuse Oberfläche (5) hat.

4. Fahrgastabteil nach einem der vorangehenden Ansprüche, **dadurch gekennzeichnet, dass** die Scheibe (7) aus Glas, insbesondere Weißglas, vorzugsweise Sicherheitsglas, oder Kunststoff gebildet ist.

5. Fahrgastabteil nach einem der vorangehenden Ansprüche, **dadurch gekennzeichnet, dass** die satinierte Oberfläche (8) ins Innere der Beleuchtungsvorrichtung (1) weist.

6. Fahrgastabteil nach einem der vorangehenden Ansprüche, **dadurch gekennzeichnet, dass** ein weiterer Reflektor (9) bezogen auf die Vorwärtsrichtung (X) hinter den und/oder seitlich der Leuchtdioden (3) angeordnet ist.

7. Fahrgastabteil nach Anspruch 6, **dadurch gekennzeichnet, dass** der Reflektor (9) höchstens so lang wie die Reihe von Leuchtdioden (3) ist.

8. Fahrgastabteil nach Anspruch 6 oder 7, **dadurch gekennzeichnet, dass** der Reflektor (9) eine zumindest teilweise diffuse Oberfläche (10) hat.

## Claims

1. A passenger compartment with a luggage rack with an illumination device (1) for the illumination of the inside of a vehicle with a light source (2) emitting light in a forward direction (X), wherein the light source (2) comprises a plurality of light-emitting diodes (3) arranged next to each other in a row, wherein the row of light-emitting diodes (3) is arranged in a direction (Y) extending vertically to the forward direction (X) of the emitted light, wherein a reflector (4) is provided, the reflector (4) diverting the light of all light-emitting diodes (3), and the reflector (4) being arranged in parallel to the row of light-emitting diodes (3), and wherein the illumination device (1) comprises a light-exit opening (6), **characterised in that** the reflector (4), with reference to the forward direction (X), is arranged in front of the light source (2), **in that** the light-exit opening (6) lies in a plane extending in parallel to the forward direction (X) and to the direction (Y) of the row of light-emitting diodes (3), **in that** the light-exit opening (6) is covered by an at least partially transparent pane (7) comprising a satined surface (8), and **in that** the light after being diverted exits from the light-exit opening (6) in a direction (Z), which is pointing downwards and is extending vertically to the forward direction (X) and to the direction (Y) of the row of light-emitting diodes (3) .

2. The passenger compartment according to claim 1, **characterised in that** the reflector (4), at most, is as long as the row of light-emitting diodes (3).

3. The passenger compartment according to claim 1 or 2, **characterised in that** the reflector (4) has an at least partially diffuse surface (5).

4. The passenger compartment according to one of the preceding claims, **characterised in that** the pane (7) is formed of glass, in particular white glass, preferably safety glass, or plastic.

5. The passenger compartment according to one of the preceding claims, **characterised in that** the satined surface (8) points into the interior of the illumination device (1).

6. The passenger compartment according to one of the preceding claims, **characterised in that** a further reflector (9), with reference to the forward direction (X), is arranged behind and/or laterally to the light-emitting diodes (3).

7. The passenger compartment according claim 6, **characterised in that** the reflector (9), at most, is as long as the row of light-emitting diodes (3).

8. The passenger compartment according to claim 6 or 7, **characterised in that** the reflector (9) has an at least partially diffuse surface (10).

## Revendications

1. Compartiment passagers avec un emplacement à bagages avec un dispositif d'éclairage (1) pour l'éclairage d'espaces intérieurs de véhicules avec une source lumineuse (2) qui émet de la lumière dans une direction vers l'avant (X), la source lumineuse (2) présentant une pluralité de diodes électroluminescentes (3) disposées les unes à côté des autres sur une rangée, la rangée de diodes électroluminescentes (3) étant disposée dans une direction (Y) qui s'étend perpendiculairement à la direction vers l'avant (X) de la lumière émise, un réflecteur (4) étant prévu, le réflecteur (4) déviant la lumière de toutes les diodes électroluminescentes (3) et le réflecteur (4) étant disposé parallèlement à la rangée de diodes électroluminescentes (3), et le dispositif d'éclairage (1) présentant une ouverture de sortie de lumière (6), **caractérisé en ce que** le réflecteur (4) est disposé devant la source lumineuse (2) compte tenu de la direction vers l'avant (X), **en ce que** l'ouverture de sortie de lumière (6) se situe dans un plan qui s'étend parallèlement à la direction vers l'avant (X) et à la direction (Y) de la rangée de diodes électroluminescentes (3), **en ce que** l'ouverture de sortie de lumière (6) est recouverte par une plaque (7) au moins partiellement transparente présentant une surface satinée (8), et **en ce qu'**après la déviation, la lumière sort de l'ouverture de sortie de lumière (6) dans une direction (Z) qui est orientée vers le bas et qui s'étend perpendiculairement à la direction vers l'avant (X) et à la direction (Y) de la rangée de diodes électroluminescentes (3).

2. Compartiment passagers selon la revendication 1, **caractérisé en ce que** le réflecteur (4) est tout au plus aussi long que la rangée de diodes électroluminescentes (3).

3. Compartiment passagers selon la revendication 1 ou 2, **caractérisé en ce que** le réflecteur (4) possède une surface (5) au moins partiellement diffuse.

4. Compartiment passagers selon l'une des revendications précédentes, **caractérisé en ce que** la plaque (7) est en verre, en particulier du verre blanc, de préférence du verre de sécurité, ou en plastique.

5. Compartiment passagers selon l'une des revendications précédentes, **caractérisé en ce que** la surface satinée (8) est orientée vers l'intérieur du dispositif d'éclairage (1).

6. Compartiment passagers selon l'une des revendications précédentes, **caractérisé en ce qu'**un autre réflecteur (9) est disposé derrière les diodes électroluminescentes (3) et/ou sur le côté de celles-ci compte tenu de la direction vers l'avant (X) .

7. Compartiment passagers selon la revendication 6, **caractérisé en ce que** le réflecteur (9) est tout au plus aussi long que la rangée de diodes électroluminescentes (3).

8. Compartiment passagers selon la revendication 6 ou 7, **caractérisé en ce que** le réflecteur (9) possède une surface (10) au moins partiellement diffuse.
